# EUROPEAN PATENT SPECIFICATION

(11) **EP 0 333 236 B1**
(45) Date of publication and mention of the grant of the patent: **08.09.1993**
(21) Application number: 89109554.9
(22) Date of filing: 15.10.1984
(51) Int. Cl.: B68G 7/05, B29C 67/22, B29L 31/58

(54) **Process for forming cushion articles**
Verfahren zum Herstellen von Polsterartikeln
Procédé pour former des articles rembourés

(30) Priority: 19.01.1984 US 572068; 02.10.1984 US 655917
(43) Date of publication of application: 20.09.1989
(62) Divisional of application: 84307054.1
(73) Proprietor: SEARS MANUFACTURING COMPANY, Davenport, Iowa 52808 (US)
(72) Inventor: Sears, I. Weir, Jr., Davenport Iowa (US); Hostetler, John E., Bettendorf Iowa (US); Hulsebusch, William H., DeWitt Iowa (US)
(74) Representative: Lerwill, John

(56) References cited:
- EP-A- 0 072 648
- EP-A- 0 145 168
- DE-A- 1 183 353
- FR-A- 2 062 566
- GB-A- 2 006 667
- GB-A- 2 103 468
- US-A- 3 589 967
- US-A- 3 643 308
- US-A- 4 287 143

## Description

This invention relates generally to a cushion article and a process for molding the article and, more particularly, to an upholstered cushion which has a cloth covering including an outer fabric layer of standing pile fabric or the like, the fabric being heat set without disturbing the natural surface characteristics of the fabric.

Traditional methods of making upholstered cushions have involved cutting the cover material according to an appropriate pattern, sewing the material and stuffing the cushion. Such methods result in high labor costs since, in most instances, the cutting and sewing operations are performed manually or with labor intensive techniques.

To reduce the costs of manufacturing cushion articles, a molding process was devised for manufacturing seat cushions comprising a foam portion having an integral vinyl cover. The vinyl cover first is heated and then drawn into a cold mold by means of a vacuum between the vinyl and the mold. As the vinyl cools, it assumes the contours of the mold. Foam then is poured into the mold to form the foam portion of the seat cushion. This process significantly reduces manufacturing costs.

However, cloth has many advantages over vinyl. Specifically, cloth is water vapor permeable. Perspiration that normally collects behind a person sitting in a vinyl seat can pass through cloth and be evaporated so that cloth feels cooler during warm weather and warmer during cold weather. Furthermore, the feel of the cloth is much more luxurious and elegant.

In recognition of these advantages, a novel molding process was devised for manufacturing seat cushions comprising a foam portion having an integral cover including an outer cloth layer. It was found particularly advantageous to set the stitch of the fabric layer in the mold. This is accomplished by employing a mold heated to at least the fabric set temperature when the cloth is drawn into the mold. The fabric layer is thereby heated and then allowed to cool. By this process the fabric stitch is set to the precise contours of the mold. A foamable material then is poured into the mold after the cooling step to form an integral seat cushion with a fabric cover. The fabric normally is bonded or laminated to a vinyl film to permit the cover to be vacuum drawn into the mold.

All of the above innovations in the art have resulted in labor savings and improved products because the cloth is processed and shaped much more quickly than in the traditional cutting and sewing process. Shapes commonly found in tufted furniture require yards of sewing, and the assembly of tufts also requires extensive labor.

Yet, certain problems still have note been met by the above innovations in the art. First, tremendous time and energy losses are incurred by repeatedly heating the mold to set the fabric layer of the cover and then cooling the mold to pour the foamable resin and form the integral cushion. A method of reducing some energy losses was devised wherein the cloth is heated to its set temperature in a first mold and then transferred to a cooler mold where the foam cushion is formed. This process, however, obviously requires multiple molds. The process is described in US-A-4287143.

A second problem associated with these prior art processes concerns the use of standing pile or "plush" fabrics which have definite natural surface characteristics. For purposes herein, such fabrics are intended to include velour, velvet, brushed and a variety of fabric materials which have a defined pile that is capable of being crushed or the surface characteristics destroyed by heat and pressure. When such pile fabrics are drawn into a mold and heated to their heat fixable fibre set temperatures, not only are the fibres set but the pile becomes set as well as it is biased against the interior surface of the mold. Thus the surface characteristics of the pile become altered or destroyed.

The present invention is directed to solving the above-identified problems by provided a new and improved process of molding a cushion article without repeated heating and cooling of molds and without altering the surface characteristics of the covering fabric of the cushion.

In US-A-3643308 there is disclosed a method for manufacturing mattresses wherein a cushion member comprising an assembly of coil springs sandwiched between layers of cushion material is inserted into a bag-like cover prepared by sewing together fabric pieces. To facilitate the assembly procedure, the cover is made of heat shrinkable fabric with an initial internal capacity greater than the volume of the cushion member, and after assembly the cover is heated to shrink the fabric sufficiently to compress the enclosed cushion member. This method has no advantages for the manufacture of cloth covered foam cushions.

In EP-A-0072648 there is described a process for producing garments, particularly trousers, using an expandable mold having the desired shape of the garment. A preformed garment shell of unfinished cloth is placed over the mold which is then expanded to put the cloth under uniform tension. The cloth shell is treated, e.g. by dipping into a hot dye bath, while on the expanded mold to set the cloth. The shell is then removed from the mold and retains the three dimensional shape. This method does not provide any answer to the disadvantages inherent in known methods for producing cloth-covered cushion articles.

In accordance with the present invention there is provided a process for forming a cloth-covered cushion article, comprising the steps of constructing a foam cushion having the shape of the desired cushion article, and placing a cloth covering over the cushion characterised in that the cloth covering placed over the cushion is of unfinished cloth, and the cloth covering is treated while on the cushion so that the cloth will retain the three dimensional shape of the cushion.

The present invention provides a new and improved process for forming cloth-covered cushion articles such as seat cushions or the like, which eliminates or significantly reduces the energy losses incurred by repeated heating and cooling of molds to first set the cloth covering and then to pour the resin and cure the foam for the cushion. By the process of the invention the cloth covering of a cushion article is set in contour after the cushion is formed.

In a particular embodiment the cloth covering is applied to the foam cushion after it is formed and heat set with the cushion acting as a male mold.

In the specification of our European Patent Application 84307054.1 (Publication No. 0149303) out of which this application is divided there is described a process for forming cloth-covered cushion articles wherein a mold having the shape of the desired cushion article is provided and a cloth covering is drawn into the mold. Polyurethane resin then is poured into the mold and cured to form the foam cushion article. The cushion article is removed from the mold and heated to at least the heat-fixable fiber set temperature of the cloth covering. Thus, the cloth covering is heat set in contour after the cushion is formed. The cured foam cushion itself acts as a male mold to hold the fabric of the cloth in contour as it is heat set. The use of the cushion as a male mold eliminates any interference with or possible altering of the natural surface characteristics of the outer fabric layer of the cloth covering during the heat setting operation.

In a particular form of the present invention, the resin is poured directly into the mold and cured to form the desired shape of the cushion article. The cured foam is removed from the mold and an unfinished cloth covering is placed over it. The covering preferably is preformed into a complementary three-dimensional shape and is held onto the foam cushion article by any one of a variety of means such as mechanical clamps or adhesive. The cloth covering then is heated while on the cured foam so that the cloth will retain the three-dimensional shape of the cured foam cushion. The cloth covering then is cooled while on the cushion. Here again, the cured foam cushion itself acts as a male mold to hold the fabric of the cloth in contour as it is heat set.

Other features, advantages and objects of the invention will be apparent from the following detailed description taken in connection with the accompanying drawings, in which:-
Figures 1 to 6 illustrate successive steps in performing the process in which the cloth is drawn into a mold before the foam is poured in and then cured with the cushion then being extracted and subject to the cloth setting step of the process;
Figure 7 is a perspective view of a contoured cushion and fixture means for holding the cloth covering on the cushion during setting in a process according to the invention;
Figure 8 is a fragmented section illustrating a portion of the fixture means holding the cloth covering in a depression in the cushion; and
Figure 9 is a fragmented elevation of a portion of the fixture means, illustrating its bottom serrated edge.

The process of the present invention may be employed to form or mold cloth-covered cushion articles for any conceivable application. Such applications include automotive vehicle seats, aviation seats, chair cushions, stool cushions and other seating applications; padding for headboards, baby carriages, bar fronts, church kneelers, buses and handrails; as well as panelling and wall coverings for elevators, offices, tables, cabinets and the like.

The process of the present invention may utilize a wide variety of cloth materials, such as that woven or knitted from man-made or natural yarns or fibers which are capable of being heat set. To this end, the invention contemplates the use of "unfinished cloth" which is intended to mean cloth that has not been subjected in the flat to any of the conventional treatments intended to impart to the cloth a permanent dimensional or shape memory or to set or fix the intersections of the yarn.

The use of "standing pile fabrics" is intended to mean fabrics which have a definite natural surface characteristic or "surface loft", such as velour, velvet, brushed and a variety of fabric materials which have a defined pile that is capable of being crushed or the surface characteristics destroyed or altered by heat and pressure.

In its simplest form, the invention contemplates heat setting at least the outer fabric layer of a cloth-covered cushion article in contour after the cushion itself is formed. This not only eliminates repeated heating and cooling of the molds in various known processes, but the surface characteristics of the cloth fabric remain unaltered and in natural condition.

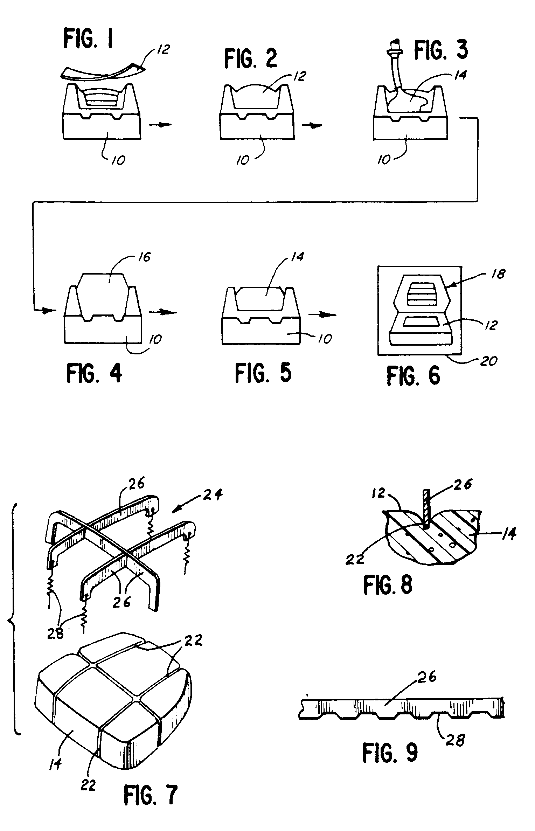

Before describing the process of the present invention reference is first made to Figures 1 to 6 which illustrates an alternative process which includes the provision of a mold such as female mold 10 (Fig. 1) having the shape of a desired cushion article, such as a seat cushion or the like. A cloth covering 12 is provided for the cushion article. Some types of cloth normally include an outer fabric layer bonded to an elastic composition layer. The fabric layer will engage the interior surface of female mold 10. The composition layer normally includes a film layer and a foam layer sandwiched between the film layer and the fabric layer. The film layer permits the cloth covering to be vacuum drawn into female mold 10 as shown in Figure 2.

After cloth covering 12 is drawn into mold 10, foamable material (i.e. polyurethane resin) 14 may then be poured into the mold in its liquid state, as illustrated in Figure 3. Cold cure, polyether-type polyurethane is preferably employed, although any foamable material that adheres to the film layer of the cloth covering may be used. In practice, female mold 10 may be heated at a temperature on the order of approximately 130°F (54°C) to render cloth covering 12 pliable.

A male mold 16 then is placed over female mold 10 as illustrated in Figure 4. After approximately 15 minutes, foam 14 has fully expanded within the mold. The unfinished cushion article may then be extracted from female mold 10 as illustrated in Figure 5.

The unfinished cushion article, generally designated 18 (Fig. 6), then is placed in an oven 20 where it is heated to at least the heat-fixable fiber set temperature of the cloth covering 12. Thus, it can be seen that the cloth covering is heat set in contour after the foam cushion itself is formed. The foam cushion acts as a male mold to hold the fabric of the covering in contour during heat setting in oven 20.

It can be seen from the foregoing that repeated heating and cooling steps of prior art processes are completely eliminated and the outer surface of the outer fabric layer of the cloth covering 12 never comes in contact with the surface of a mold which is heated sufficiently to set the fabric or alter the pile or natural surface characteristics of the fabric. The following specific examples further illustrate the foregoing process.

### EXAMPLE 1

A moldable cloth covering including a fabric layer of 14-ounce unfinished polyester pile material was drawn into mold 10. Foamable material was poured into the mold in its liquid state and cold cured. The unfinished cushion article was placed in oven 20 and heated to a temperature on the order of approximately 360°F (182°C). The pile fabric was heat set as the cured foam cushion acted as a male mold to hold the cloth covering in contour during heat setting of the fabric. The pile of the fabric was unaltered and its natural surface characteristics retained.

### EXAMPLE 2

A moldable cloth including an outer layer of unfinished nylon was drawn into mold 10. The nylon fabric was a Type 6, 12-13 ounce knit material. Foamable material 14 was poured into the mold in its liquid state and cold cured. The unfinished cushion article was sprayed with a cold diester solution and placed in oven 20. The oven was heated at a temperature on the order of approximately 300°F (149°C). The nylon fabric of the covering for the cushion heat set in contour as the cured foam acted as a male mold to hold the fabric during heat setting. The cushion article was rinsed with a solvent to remove excess diester solution, and the article was dried to evaporate the solvent. The natural surface characteristics of the nylon fabric remained totally unaltered and in natural condition.

### EXAMPLE 3

A moldable nylon cloth was used in a process similar to that described above in Example 2. However, instead of applying cold diester solution to the fabric and heating the fabric covered cushion in an oven, the diester solution itself was applied hot at a temperature on the order of approximately 300°F (149°C). The nylon fabric of the covering for the cushion heat set in contour onto the foam cushion as the cushion acted as a male mold to hold the fabric in contour during the heat setting. The natural surface characteristics of the fabric remained unaltered and in natural condition.

In the modified process according to the present invention, polyurethane resin 14 is poured directly into mold 10 and cured to form the desired shape of the foam cushion article. The foamable material may be poured into the mold in its liquid state and cold cured. The cured foam cushion is removed from the mold and a cloth covering is placed over the cushion. The covering is of unfinished cloth. The cloth preferably is preformed into a shell complementary to the three-dimensional shape of the cushion article. The shell is held onto the cushion by any of a variety of means such as mechanical means or adhesive. An open cell foam can be employed and vacuum applied to a vinyl backed covering. The cloth covering then is treated or and/or heated while on the cured foam cushion so that the cloth will retain the three-dimensional shape of the cushion. The cloth covering then is cooled while on the cushion. Here again, the cured foam cushion itself acts as a male mold to hold the fabric of the cloth in contour as it is heat set.

The cloth covering is heated to a temperature above the heat-set threshold and cooled to a temperature below the cloth heat-set temperature. However, the present invention is not intended to be limited to any particular heat or chemical setting processes. Rather, the present invention is directed to any finishing step which will effect shape and dimensional memory in the cloth while it is on the cured foam cushion.

With reference to Figures 7-9, when the foam cushion first is formed and the cloth covering is thereafter placed over the cushion for setting, the three-dimensional shell is held onto the cushion by a variety of means such as mechanical means or adhesive. Figures 7-9 show one form of mechanical means that not only holds the unfinished shell onto the preformed cushion, but also holds the cloth covering in various contours which may have been formed in the cushion.

More particularly, a preformed cushion may have various contour lines or other contour features forming depressions. There may be a tendency for the cloth covering, during setting, to shrink or lose contour and sometimes pull away from the preformed cushion. Therefore, appropriate complementary fixture means are employed to hold the cloth covering in the contour depressions during setting. For instance, the cushion may have style lines or grooves 22 (Fig. 7) in its surface. Complementary fixture or frame means, generally designated 24, are provided to hold the cloth covering in the style lines or grooves. As shown, fixture means 24 comprises a plurality of thin edge-projections 26 integrally formed and held down onto the cushion by springs 28 secured to an appropriate base.

Figure 8 illustrates one of the edge-projections 26 holding cloth covering 12 in a style line or groove 22 of foam cushion 14.

Figure 9 shows one of the edge-projections 26 of fixture means 24 provided with a serrated bottom edge 28. During setting, this serrated bottom edge will emboss the cloth covering to simulate various designs such as stitching.

In summary, the cloth covering may be treated while on the foam cushion in a variety of ways to complete the finishing of the cloth in the desired predetermined shape. The particular treatment employed will, of course, depend on the kind of cloth used in the process. For example, synthetics such as polyester, nylon and acrylic may be effectively set by use of a tentering treatment; cotton cloth may be set by tentering and/or ammonia swelling processes; and wool by tentering or crabbing, dry finishing and decating. Those skilled in the art will appreciate, however, that many other setting treatments may be employed. It can be seen that the foam cushion article which acts as a novel male mold in treating or setting the cloth covering actually becomes part of the final product. Of course, the cured foam cushion must be sufficiently rigid to withstand any shrinkage of the cloth during setting. It has been found that at least a 35 pound deflection rating is acceptable. In other words, an "indention load deflection" rating is determined by the weight required to deflect the foam one inch when applied over a fifty inch area.

Although only a few exemplary embodiments of this invention have been described in detail above, those skilled in the art will readily appreciate that many modifications, including different heat setting techniques, are possible in the exemplary embodiments without materially departing from the novel teachings and advantages of this invention.

Accordingly, all such modifications are intended to be included within the scope of this invention as defined in the following claims.

## Claims

1. A process for forming a cloth-covered cushion article, comprising the steps of constructing a foam cushion (14) having the shape of the desired cushion article, and placing a cloth covering (12) over the cushion, characterised in that the cloth covering (12) placed over the cushion is of unfinished cloth, and the cloth covering (12) is treated while on the cushion (14) so that the cloth will retain the three dimensional shape of the cushion.

2. The process of claim 1, wherein the cloth covering (12) placed over the cushion (14) is of unfinished cloth including heat fixable fibres, the cloth covering is treated by heating while on the cushion to at least the heat-fixable fibre set temperature of the cloth covering so that the cloth will retain the three dimensional shape of the cushion, and the cloth covering is cooled while on said cushion.

3. The process of claim 2, wherein said cloth covering is heated to a temperature above the cloth heat-set threshold and cooled to a temperature below the cloth heat-set temperature.

4. The process of claim 2 or 3, wherein the cloth covering (12) is held onto the cushion (14) during said heating step.

5. The process of claim 2 or 3, wherein the cloth covering is preformed into a shell complementary to the three dimensional shape of the cushion.

6. The process of claim 5, wherein the preformed shell is held onto the cushion during said heating step.

7. The process of claim 1, wherein the cloth covering (12) is held onto the cushion (14) during said treating step.

8. The process of claim 7, wherein said foam cushion is constructed with a contour including at least one depression (22), and the cloth covering is held onto the cushion with portions held in said depression.

9. The process of claim 8, including the step of applying fixture means (24) to said cloth covering before said treating step to hold the covering onto the cushion.

10. The process of claim 9, wherein said fixture means has projection means (26) for holding the cloth covering in said depression.

11. The process of claim 1, wherein the cloth covering is preformed into a shell complementary to the three dimensional shape of the cushion.

12. The process of claim 11, wherein the preformed shell is held onto the cushion during said treating step.

13. The process of claim 1, wherein the foam cushion is made with a contour having at least one depression (22), the cloth covering has heat fixable fibres therein, the cloth covering is held on to the cushion with portions thereof held in said depression, the cloth covering is treated by heating the cloth covering while held on the cushion to at least the heat fixable fibre set temperature of the cloth covering, and the cloth covering is cooled on said cushion.

14. The process of claim 13, wherein the cloth covering is released from the cushion after said cooling step.

15. The process of claim 13 or 14, including the step of applying fixture means (24) to said cloth covering before said heating step to hold the covering onto the cushion.

16. The process of claim 15, wherein said fixture means has projection means (26) for holding the cloth covering in said depression.

17. The process of claim 16, wherein said foam cushion is constructed with depressions defining style lines, and said fixture means is provided with edge projections (26) for holding the cloth covering in said style-line depressions.

18. The process of claim 17, wherein said edge projections (26) are serrated to create embossments in the cloth covering, during setting, to simulate stitching.

## Patentansprüche

1. Verfahren zur Herstellung eines stoffbezogenen Polsterartikels, das die Schritte der Herstellung eines Schaumpolsters (14) mit der Form des gewünschten Polsterartikels und des Aufziehens eines Stoffbezuges (12) auf das Polster umfaßt, **dadurch gekennzeichnet**, daß der auf das Polster aufgezogene Stoffbezug (12) aus unbearbeitetem Stoff besteht, und daß der Stoffbezug (12) behandelt wird, während er sich auf dem Polster (14) befindet, so daß der Stoff die dreidimensionale Form des Polsters beibehält.

2. Verfahren nach Anspruch 1, wobei der auf das Polster (14) aufgezogene Stoffbezug (12) aus unbearbeitetem Stoff besteht, der wärmefixierbare Fasern enthält, der Stoffbezug mittels Erwärmen behandelt wird, indem er, während er sich auf dem Polster befindet, auf wenigstens die Wärmefixiertemperatur der wärmefixierbaren Fasern des Stoffbezuges erwärmt wird, so daß der Stoff die dreidimensionale Form des Polsters beibehält, und der Stoffbezug abgekühlt wird, während er sich auf dem Polster befindet.

3. Verfahren nach Anspruch 2, wobei der Stoffbezug auf eine Temperatur über dem Wärmefixierschwellenwert des Stoffs erwärmt wird und auf eine Temperatur unter der Wärmefixiertemperatur des Stoffs abgekühlt wird.

4. Verfahren nach Anspruch 2 oder 3, wobei der Stoffbezug (12) während des Erwärmungsschrittes auf dem Polster (14) gehalten wird.

5. Verfahren nach Anspruch 2 oder 3, wobei der Stoffbezug zu einer Hülle vorgeformt wird, die der dreidimensionalen Form des Polsters komplementär ist.

6. Verfahren nach Anspruch 5, wobei die vorgeformte Hülle während des Erwärmungsschrittes auf dem Polster gehalten wird.

7. Verfahren nach Anspruch 1, wobei der Stoffbezug (12) während des Behandlungsschrittes auf dem Polster (14) gehalten wird.

8. Verfahren nach Anspruch 7, wobei das Schaumpolster mit einer Form hergestellt wird, die wenigstens eine Vertiefung (22) enthält, und beim Halten des Stoffbezuges auf dem Polster Abschnitte davon in der Vertiefung gehalten werden.

9. Verfahren nach Anspruch 8, das den Schritt des Anbringens einer Haltevorrichtung (24) an dem Stoffbezug vor dem Behandlungsschritt enthält, um den Bezug auf dem Polster zu halten.

10. Verfahren nach Anspruch 9, wobei die Halteeinrichtung eine Vorsprungseinrichtung (26) zum Halten des Stoffbezuges in der Vertiefung aufweist.

11. Verfahren nach Anspruch 1, wobei der Stoffbezug zu einer Hülle vorgeformt wird, die der dreidimensionalen Form des Polsters komplementär ist.

12. Verfahren nach Anspruch 11, wobei die vorgeformte Hülle während des Behandlungsschrittes auf dem Polster gehalten wird.

13. Verfahren nach Anspruch 1, wobei das Schaumpolster mit einer Form hergestellt wird, die wenigstens eine Vertiefung (22) aufweist, der Stoffbezug wärmefixierbare Fasern enthält, der Stoffbezug auf dem Polster gehalten wird, wobei Abschnitte desselben in der Vertiefung gehalten werden, der Stoffbezug behandelt wird, indem der Stoffbezug, während er auf dem Polster gehalten wird, wenigstens auf die Fixiertemperatur der wärmefixierbaren Fasern des Stoffbezuges erwärmt wird, und der Stoffbezug auf dem Polster abgekühlt wird.

14. Verfahren nach Anspruch 13, wobei der Stoffbezug nach dem Abkühlungsschritt von dem Polster gelöst wird.

15. Verfahren nach Anspruch 13 oder 14, das den Schritt des Anbringens einer Halteeinrichtung (24) am Stoffbezug vor dem Erwärmungsschritt umfaßt, um den Bezug auf dem Polster zu halten.

16. Verfahren nach Anspruch 15, wobei die Halteeinrichtung eine Vorsprungseinrichtung (26) zum Halten des Stoffbezuges in der Vertiefung aufweist.

17. Verfahren nach Anspruch 16, wobei das Schaumpolster mit Vertiefungen hergestellt wird, die Verzierungslinien bilden, und die Halteeinrichtung mit Kantenvorsprüngen (26) versehen ist, die den Stoffbezug in den Verzierungslinienvertiefungen halten.

18. Verfahren nach Anspruch 17, wobei die Kantenvorsprünge (26) gezahnt sind, um beim Fixieren Prägungen im Stoffbezug zu erzeugen, die Nähte simulieren.

## Revendications

1. Procédé pour former un coussin revêtu de tissu, comprenant les étapes consistant à construire un coussin en mousse (14) ayant la forme du coussin voulu, et à placer un revêtement de tissu (12) sur le coussin, caractérisé en ce que le revêtement de tissu (12) placé sur le coussin est en tissu non fini, et le revêtement de tissu (12) est traité tandis qu'il est sur le coussin (14) de sorte que le tissu conserve la forme tridimensionnelle du coussin.

2. Procédé selon la revendication 1, dans lequel le revêtement de tissu (12) placé sur le coussin (14) est en tissu non fini comprenant des fibres fixables à la chaleur, le revêtement de tissu est traité par chauffage tandis qu'il est sur le coussin au moins à température de fixation des fibres fixables à la chaleur du revêtement de tissu de sorte que le tissu conserve la forme tridimensionnelle du coussin, et le revêtement de tissu est refroidi tandis qu'il est sur ledit coussin.

3. Procédé selon la revendication 2, dans lequel ledit revêtement de tissu est chauffé à une température supérieure au seuil de fixation à la chaleur du tissu et refroidi à une température inférieure à la température de fixation à la chaleur du tissu.

4. Procédé selon la revendication 2 ou 3, dans lequel le revêtement de tissu (12) est maintenu sur le coussin (14) pendant ladite étape du chauffage.

5. Procédé selon la revendication 2 ou 3, dans lequel le revêtement de tissu est préformé en une coquille complémentaire de la forme tridimensionnelle du coussin.

6. Procédé selon la revendication 5, dans lequel la coquille préformée est maintenue sur le coussin pendant ladite étape de chauffage.

7. Procédé selon la revendication 1, dans lequel le revêtement de tissu (12) est maintenu sur le coussin (14) pendant ladite étape de traitement.

8. Procédé selon la revendication 7, dans lequel ledit coussin en mousse est construit avec un contour comprenant au moins un évidement (22), et le revêtement de tissu est maintenu sur le coussin avec des parties maintenues dans ledit évidement.

9. Procédé selon la revendication 8, comprenant l'étape consistant à appliquer un dispositif de serrage (24) audit revêtement de tissu avant ladite étape de traitement pour maintenir le revêtement sur le coussin.

10. Procédé selon la revendication 9, dans lequel ledit dispositif de serrage comporte des dispositifs formant prolongement (26) pour maintenir le revêtement de tissu dans ledit évidement.

11. Procédé selon la revendication 1, dans lequel le revêtement de tissu est préformé en une coquille complémentaire de la forme tridimensionnelle du coussin.

12. Procédé selon la revendication 11, dans lequel la coquille préformée est maintenue sur le coussin pendant ladite étape de traitement.

13. Procédé selon la revendication 1, dans lequel le coussin en mousse est formé avec un contour comportant au moins un évidement (22), le revêtement de tissu contient des fibres fixables à la chaleur, le revêtement de tissu est maintenu sur le coussin tandis que des parties du revêtement sont maintenues dans ledit évidement, le revêtement de tissu est traité par chauffage du revêtement de tissu, tandis qu'il est maintenu sur le coussin, au moins à la température de fixation des fibres fixables à la chaleur du revêtement de tissu, et le revêtement de tissu est refroidi sur ledit coussin.

14. Procédé selon la revendication 13, dans lequel le revêtement de tissu est séparé du coussin après ladite étape de refroidissement.

15. Procédé selon la revendication 13 ou 14, comprenant l'étape consistant à appliquer le dispositif de serrage (24) audit revêtement de tissu avant ladite étape de chauffage pour maintenir le revêtement sur le coussin.

16. Procédé selon la revendication 15, dans lequel ledit dispositif de serrage comporte des dispositifs formant prolongement (26) pour maintenir le revêtement de tissu dans ledit évidement.

17. Procédé selon la revendication 16, dans lequel ledit coussin en mousse est muni d'évidements définissant des lignes de style, et ledit dispositif de serrage est muni de prolongement de bordure (26) pour maintenir le revêtement de tissu dans lesdits évidements formant lignes de style.

18. Procédé selon la revendication 17, dans lequel lesdits prolongements de bordure (26) sont striés pour créer, au cours de la fixation, des gaufrages dans le revêtement de tissu pour simuler des coutures.
